(19) Europäisches Patentamt
European Patent Office
Office européen des brevets

(11) **EP 4 465 211 A1**

(12) **EUROPEAN PATENT APPLICATION**

(43) Date of publication:
**20.11.2024 Bulletin 2024/47**

(21) Application number: **24176759.9**

(22) Date of filing: **17.05.2024**

(51) International Patent Classification (IPC):
**G06N 5/045** (2023.01)      **G06N 5/01** (2023.01)

(52) Cooperative Patent Classification (CPC):
**G06N 5/01; G06N 5/045; G06Q 40/03**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.05.2023 US 202363502791 P**

(71) Applicant: **Zestfinance, Inc.
Burbank, CA 91505 (US)**

(72) Inventors:
• **WARD, Geoffrey Michael
Burbank, CA 95105 (US)**
• **YALOV, Saar
Burbank, CA 95105 (US)**
• **WU, Zijian
Burbank, CA 95105 (US)**
• **KAMKAR, Sean Javad
Burbank, CA 95105 (US)**

(74) Representative: **Boult Wade Tennant LLP
Salisbury Square House
8 Salisbury Square
London EC4Y 8AP (GB)**

(54) **SYSTEMS AND CACHE-BASED METHODS FOR EXPLAINING TREE-BASED MODELS USING INTERVENTIONAL SHAPLEY VALUES**

(57)      Systems and cache-based methods for explaining tree-based models using interventional Shapley values are disclosed. With this technology, interventional Shapley values are used to compute attribution values from a leaf-wise approach within tree-based machine learning models. Reference traversal tables and test traversal tables are created and stored for each leaf of a decision tree. Based on the created tables, a subset of traversal permutations and respective subset size are determined on a tree by tree, leaf by leaf and feature by feature basis. For each of the nodes in a traversal path to each of the leaves, partial attribution values are generated, and an attribution for the node is adjusted based on the generated partial attribution values and a multiplier indicated in the reference traversal tables. An output explanation of a score can advantageously be obtained with reduced computational complexity and runtime.

FIG. 1

EP 4 465 211 A1

**Description**

This application claims priority to U.S. Provisional Patent Application No. 63/502,791, filed May 17, 2023, which is hereby incorporated herein by reference in its entirety.

**FIELD**

This disclosure generally relates to analyzing and explaining tree-based machine learning models and, more particularly, to cache-based methods for explaining tree-based models using interventional Shapley values.

**BACKGROUND**

Shapley values can be used in a cooperative game theory to fairly distribute gains and costs to several actors working in a coalition. Shapley values may also be used to explain output of machine learning models. While it is hard to have a complete, clear, and objective formulation providing good model explanations, Shapley values guarantee that the generated explanations for a model output follow a specific set of axioms mathematically. Therefore, the explanations with Shapley axioms are considered to be high-quality and are reliable, intuitive, and rigorous.

To apply such "theoretical" solution to a practical use scenario, additional steps need to be taken to generate actual explanations for machine learning models with Shapley values. Shapley values are feature-attribution based methods when used for explaining machine learning model outputs, wherein each feature in the model is attributed a specific contribution (e.g., a signed numeric value). Taking tree-based models as an example, such as XGBoost, Light-GBM, CatBoost, AdaBoost, RandomForest, Decision Trees, etc., discrete tree-like structures are used to map input feature values onto an output response. Then, mapping Shapley values to the tree-like structures of a machine learning model is an additional challenge. Other issues may include, for example, how to design the model's decision layer and how to perform related mathematical computations and generate Shapley explanations satisfying the fundamental Shapley axioms. For tree-based models, Generalized Integrated Gradients, Conditional TreeSHAP, interventional TreeSHAP, KernelSHAP, brute force-type approaches, etc., may be considered to utilize for the computation and generation of Shapley explanations.

When looking for a solution to apply the "theoretical" Shapley solution to a practical application, among the issues mentioned above, a significant concern is meeting a need of generating explanations for highly performant machine learning models. Currently, tree-based models are exceptionally performant and therefore dominate machine learning models in technical areas such as the discipline of credit risk underwriting.

However, existing implementations for explaining tree-based models using Shapley values are impractical due to a failure to meet the highly performant need and computational complexity, even though tremendous theoretical support behind the interventional TreeSHAP has been provided by prominent experts. Specifically, current methods for using interventional Shapley values to explain machine learning models have a time complexity of $O(TLR)$, where $T$ is the number of decision trees in an ensemble machine learning model, $L$ is the number of leaves in each of those decision trees, and $R$ is the number of reference samples that act as interventions onto a test sample to be explained and as used in the Shapley equation.

In one exemplary context, adverse action reason codes may be generated, and in fact are often required by law, to explain adverse decisions (e.g., a credit application denial) in credit underwriting. Credit models are typically explained using thousands of references for comparative purposes to explain the true non-linear and interactive effect, which requires a real-time response (e.g., on the order of milliseconds) following an adverse decision. While theoretically interventional Shapley values would provide highly accurate model explanations, current methods are too computationally inefficient to meet the practical needs in credit underwriting and many other contexts. Accordingly, real practical usage of Shapley values is desired to facilitate efficient, accurate, and real-time model explanations.

**BRIEF DESCRIPTION OF THE DRAWINGS**

The foregoing and other aspects of the present disclosure are best understood from the following detailed description when read in connection with the accompanying drawings. For the purpose of illustrating this technology, specific examples are shown in the drawings, it being understood, however, that the examples of this technology are not limited to the specific instrumentalities disclosed. Included in the drawings are the following Figures:

FIG. 1 illustrates an exemplary network environment with a model explanation system;

FIG. 2 illustrates a block diagram of an exemplary model explanation system;

FIG. 3 illustrates a flow diagram of an exemplary method for model scoring and explanation using interventional Shapley values in an exemplary context of a tree-based credit model;

FIG. 4 illustrates an exemplary depth 2 decision tree;

FIG. 5 illustrates an exemplary computation complexity for ten $x^{ref}$ samples for the exemplary decision tree in FIG. 4;

FIG. 6 illustrates evaluation of ten $x^{ref}$ samples based on node split conditions of the exemplary decision tree in FIG. 4;

FIGS. 7-10 illustrate evaluation of ten $x^{ref}$ samples based on node split conditions of the exemplary decision tree in FIG. 4 leading to each leaf, respectively;

FIG. 11 illustrates a flow diagram of an exemplary method for explaining tree-based models using interventional Shapley values;

FIGS. 12-15 illustrate exemplary reference traversal tables created for each leaf of the exemplary decision tree in FIG. 4, respectively;

FIGS. 16-19 illustrate exemplary test traversal tables created for each leaf of the exemplary decision tree in FIG. 4, respectively; and

FIGS. 20-23 illustrate exemplary reference traversal tables comprising pre-calculated reference-averaged partial attribution values created for each leaf of the exemplary decision tree in FIG. 4, respectively.

## DETAILED DESCRIPTION

The present disclosure may be understood more readily by reference to the following detailed description of exemplary examples. Before the exemplary implementations and examples of the methods, devices, and systems according to the present disclosure are disclosed and described, it is to be understood that implementations are not limited to those described within this disclosure. Numerous modifications and variations therein will be apparent to those skilled in the art and remain within the scope of the disclosure. It is also to be understood that the terminology used herein is for describing specific implementations only and is not intended to be limiting. Some implementations of the disclosed technology will be described more fully hereinafter with reference to the accompanying drawings. This disclosed technology may, however, be embodied in many different forms and should not be construed as limited to the implementations set forth therein.

In the following description, numerous specific details are set forth. But it is to be understood that examples of the disclosed technology may be practiced without these specific details. In other instances, well-known components, structures, and techniques have not been shown in detail in order not to obscure an understanding of this description. References to "an implementation," "an example," "some examples," etc., indicate that the implementation(s) of the disclosed technology so described may include a particular feature, structure, or characteristic, but not every implementation necessarily includes the particular feature, structure, or characteristic. Further, repeated use of the phrase "in some examples" does not necessarily refer to the same implementation, although it may. Additionally, it is to be understood that particular features, structures, or characteristics that described in different examples, implementations or the like, may be further combined in various ways and being implemented in one or more implementations.

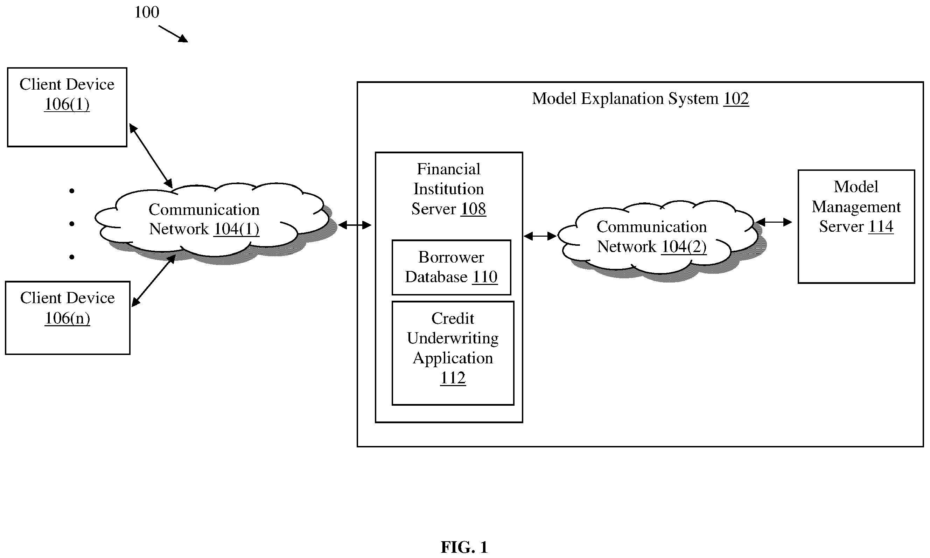

Referring to FIG. 1, an exemplary network environment 100 is illustrated that includes a model explanation system 102 coupled, via a communication network 104(1), to client devices 106(1)-106(n). The model explanation system 102 includes a financial institution server 108, with a borrower database 110 and a credit underwriting application 112, which is coupled to a model management server 114 via another communication network 104(2). The network environment 100 may include other network devices such as one or more routers or switches, for example, which are known in the art and thus will not be described herein.

In this example, the client devices 106(1)-106(n), financial institution server 108, and model management server 114 are disclosed in FIG. 1 as dedicated hardware devices. However, one or more of the client devices 106(1)-106(n), financial institution server 108, or model management server 114 can also be implemented in software within one or more other devices in the network environment. As one example, the financial institution server 108, as well as any of its components or applications (e.g., the credit underwriting application 112), can be implemented as software executing on the model management server 114, and many other permutations and types of implementations and network topologies can also be used in other examples.

Referring to FIGS. 1-2, the model explanation system 102 of the network environment 100 may perform any number of functions, including providing interfaces to the client devices 106(1)-106(n) for submission of credit applications and analyzing and explaining tree-based machine learning models. The model explanation system 102 in this example includes processor(s) 200, memory 202, and a communication interface 204, which are coupled together by a bus 206, although the model explanation system 102 can include other types or numbers of elements in other configurations.

The processor(s) 200 of the model explanation system 102 may execute programmed instructions stored in the memory 202 of the model explanation system 102 for any number of the functions described and illustrated herein. The processor(s) 200 may include one or more central or graphics processing units and/or one or more processing cores, for example, although other types of processor(s) can also be used.

The memory 202 of the model explanation system 102 stores these programmed instructions for one or more aspects of the present technology as described and illustrated herein, although some or all of the programmed instructions could be stored elsewhere. A variety of different types of memory storage devices, such as random access memory (RAM), read only memory (ROM), hard disk, solid state drives, flash memory, or other computer readable medium which is read from and written to by a magnetic, optical, or other reading and writing system that is coupled to the processor(s), can be used for the memory 202.

Accordingly, the memory 202 can store applications that can include computer executable instructions that, when executed by the model explanation system 102, cause the model explanation system 102 to perform actions, such as to transmit, receive, or otherwise process network messages and requests, for example, and to perform other actions described and illustrated below. The application(s) can be implemented as components of other applications, operating system extensions, and/or plugins, for example.

Further, the application(s) may be operative in a cloud-based computing environment with access provided via a software-as-a-service model. The application(s) can be executed within or as virtual machine(s) or virtual server(s) that may be managed in a cloud-based computing environment. Also, the application(s), and even the model explanation system 102 itself, may be in virtual server(s) running in a cloud-based computing environment rather than being tied to specific physical network computing devices. Also, the application(s) may be running in virtual machines (VMs) executing on the model analysis device and managed or supervised by a hypervisor.

In this example, the memory 202 includes a model explanation module 208 generally configured to analyze, and provide explanation information regarding, tree-based models, as described and illustrated in more detail below. The model explanation module 208 in this example includes a tree-based machine learning credit model 210, a reference cache module 212, a test cache module 214, and an adverse action reason code module 216. The tree-based machine learning credit model 210 can be a tree-based machine learning model trained and deployed to analyze credit application data to generate scores that inform underwriting decisions for borrower users of the client devices 106(1)-106(n).

While the tree-based machine learning credit model 210 is used for exemplary purposes, the technology described and illustrated herein can be used with any type of tree-based model within or outside of credit risk modeling. For example, a risk analyze/underwriter may want to compare two different credit applications to determine which features contributed to the applicants' scores being closer or further apart (e.g., to determine why applicant A is riskier than applicant B). In the case of a compliance analyst/office, this technology can be used to determine why an applicant member of a protected class, whose credit data looks similar to a non-member, receives a better score via the tree-based machine learning model.

In other examples, this technology can be used to generate and analyze row-level feature importance plots, where the (raw) feature value is plotted on the x-axis (e.g., credit length in years) and the attribution on the y-axis (e.g., impact of credit length in years). Each of the N applicants (in a set) are plotted together to understand how the model treats different feature values. Because the features are interacting and Shapley values can tease out the interactions (mapping back onto singular features), the variance for any given feature value will be shown as well in such a row-level feature important plot.

Additionally, this technology can be used to analyze disparate treatment with respect to members of a protected class as a group and non-members of the protected class as a group. More generally, this technology can be used to determine the top features of a model with respect to output/score contribution, which can be disaggregated by specific segments (e.g., top feature for thin file applicants, top features for applicants with long histories, etc.) In yet other examples, this technology can be used with tree-based models to predict fraud, patient hospitalization time, or the likelihood of a customer purchasing a product on a website, many other examples, to facilitate score explanation and/or feature contribution, among other model characteristics.

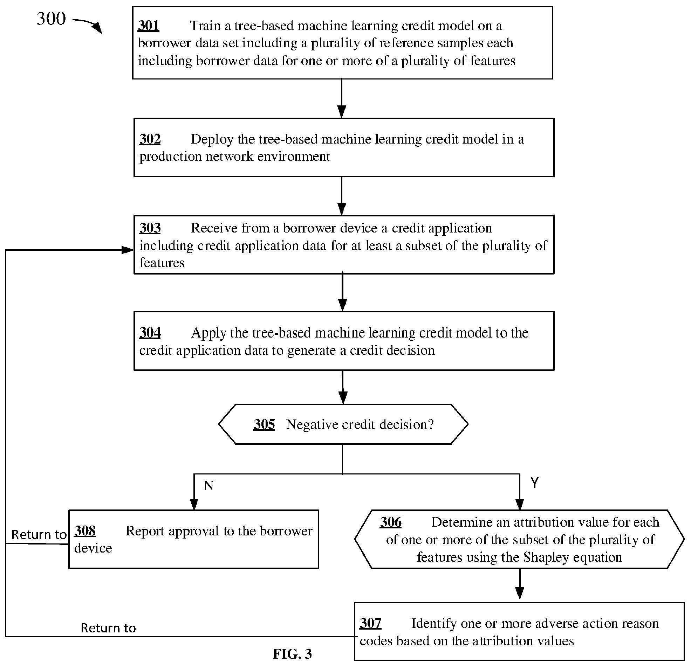

The reference cache module 212 in this example is configured to generate attribution values for features of the tree-based machine learning credit model 210 for particular test sample data (e.g., credit application data for a borrower) based on reference samples used to train the tree-based machine learning credit model 210 and an interventional Shapely value approach described and illustrated in more detail below with reference to FIG. 3. The test cache module 214 is configured to generate and store relatively robust reference traversal tables that include pre-calculated partial attribution values for features for reference permutations. The reference traversal tables can be used as explained in more detail below to reduce the compute time required by the operation of the reference cache module 212 in exchange for increased memory utilization.

The adverse action reason code module 216 is configured to perform a mapping or other analysis of the attribution values generated by the reference cache module 212 or the test cache module 214 to identify adverse action reason codes that explain a denial generated based on the application of the tree-based machine learning credit model 210. In some examples, the adverse action reason code module 216 is configured to rank the features for a borrower based on the attribution values to identify the features most contributing to a denial of the borrower's credit application and provide adverse action reason codes corresponding to those most contributing features. Any other method of identifying or providing adverse action reason codes can also be used in other examples. Additionally, other information can be stored in the memory 202 in other examples, and other data stores and/or applications or modules also can be hosted by the model analysis device in other examples.

The communication interface 204 of the model explanation system 102 operatively couples and communicates between the model explanation system 102 and the client devices 106(1)-106(n), which are coupled together at least in part by the communication network 104(1), although other types or numbers of communication networks or systems with other types or numbers of connections or configurations to other devices or elements can also be used. In some examples, the model explanation system 102 includes the financial institution server 108 and the model management server 114, which are coupled together via communication network 104(2).

In these examples, the financial institution server 108 can be hosted by a loan underwriter, bank, or other type of financial institution, for example. The financial institution server 108 can host borrower database 110 including reference samples that are used to train the tree-based machine learning credit model 210. The borrower database 110 can include historical credit application data for a plurality of borrowers, including both approved and denied borrowers, for example. The credit underwriting application 112 can be access by users of the client devices 106(1)-106(n) (e.g., borrowers or credit applicants) to submit credit applications including credit application data via provided forms and/or graphical user interfaces (GUIs), for example.

Thus, the credit underwriting application 112 can apply the tree-based machine learning credit model 210 to the credit application data to generate credit scores that inform credit decisions (e.g., approve or deny a credit application). The model management server 114 can train, deploy, host, and/or explain the tree-based machine learning credit model 210 or scores generated thereby. Accordingly, the model management server 114 can interpret the borrower data in the borrower database 110, along with third party data (e.g., credit bureau data) to train, improve, or optimize the tree-based machine learning credit model 210. The model management server 114 can then host the tree-based machine learning credit model 210 and interface with the credit underwriting application 112 for scoring and/or decisioning or deploy the tree-based machine learning credit model 210 to the financial institution server 108, and other types of topologies can also be used.

Similarly, the model management server 114 can host the model explanation module 208 and interface with the credit underwriting application 112 to explain model output, such as a credit application denial. The explanations can be carried out as described and illustrated in more detail below. However, in other examples, the credit underwriting application 112, and/or the financial institution server 108, can host the model explanation module 208, or a portion thereof and, again, other permutations can also be used in other examples.

The communication network 104(1) and/or 104(2) can include any type of communication network(s) including wide area network(s) (WAN(s)) and/or local area network(s) (LAN(s)) and can use TCP/IP over Ethernet and industry-standard protocols, although other types or numbers of protocols or communication networks can be used. The communication network 104(1) and/or 104(2) in this example can employ any suitable interface mechanisms and network communication technologies including, for example, Ethernet-based Packet Data Networks (PDNs).

Each of the client devices 106(1)-106(n) of the network environment 100 in this example includes any type of computing device that can exchange network data, such as mobile, desktop, laptop, or tablet computing devices, virtual machines (including cloud-based computers), or the like. Each of the client devices 106(1)-106(n) in this example includes a processor, a memory, and a communication interface, which are coupled together by a bus or other communication link (not illustrated), although other numbers or types of components could also be used.

Each of the client devices 106(1)-106(n) may run interface applications, such as standard web browsers or the standalone applications, which may provide an interface to communicate with the financial institution server 108 via the communication network 104(1). Each of the client devices 106(1)-106(n) may further include a display device, such as a display screen or touchscreen, or an input device, such as a keyboard or mouse, for example (not illustrated).

Although the exemplary network environment with the client devices 106(1)-106(n), model explanation system 102, and communication network 104(1) are described and illustrated herein, other types or numbers of systems, devices, components, or elements in other topologies can be used. It is to be understood that the systems of the examples described herein are for exemplary purposes, as many variations of the specific hardware and software used to implement the examples are possible, as will be appreciated by those skilled in the relevant art(s).

One or more of the components depicted in the network environment 100, such as the client devices 106(1)-106(n), financial institution server 108, or model management server 114, for example, may be configured to operate as virtual instances on the same physical machine. In other words, one or more of the client devices 106(1)-106(n), financial institution server 108, or model management server 114 may operate on the same physical device rather than as separate devices communicating through the communication network 104 and/nor 104(2). Additionally, there may be more or fewer client devices, financial institution servers, or model management servers than illustrated in FIG. 1.

The examples of this technology may also be embodied as one or more non-transitory computer readable media having instructions stored thereon, such as in the memory 202 of the model explanation system 102, for one or more aspects of the present technology, as described and illustrated by way of the examples herein. The instructions in some examples include executable code that, when executed by one or more processors, such as the processor(s) 200 of the model explanation system 102, cause the processors to carry out steps necessary to implement the methods of the examples of this technology that will now be described and illustrated herein.

Referring now to FIG. 3, a flow diagram of an exemplary method 300 for model scoring and explanation using interventional Shapley values in an exemplary context of the tree-based tree-based machine learning credit model 210 is illustrated. In step 301, the model explanation system 102 trains the tree-based machine learning credit model 210 on a borrower data set. In some examples, the credit model 210 can be based on an XGBoost, LightGBM, CatBoost, AdaBoost, RandomForest, gradient-boosted, or decision tree model type, or an ensemble model thereof, that uses discrete tree-like structures that map input feature values onto an output response. As discussed above, the borrower data set can be stored in the borrower database 110 and retrieved therefrom (e.g., by the model explanation system 102 or the model management server 114) as needed. The borrower data set includes a plurality of reference samples each of which includes borrower data for one or more of a plurality of features in the tree-based machine learning credit model 210.

In step 302, the model explanation system 102 deploys the tree-based machine learning credit model 210 in a production network environment. The production network environment may be the same or similar as the exemplary network environment 100 illustrated in FIG. 1 or may be a different variant environment, which is applicable to implement operations described in this disclosure. Thus, in some examples, the deployment in step 302 is by the financial institution server 108 via the credit underwriting application 112, although other types of deployments and/or production environments can also be used.

In step 303, the model explanation system 102 receives from a borrower device (e.g., one of client devices 106(1)-106(n)) a credit application filed by a user of the borrower device (e.g., via graphical user interfaces associated with the credit underwriting application 112 provided by the financial institution server 108). The credit application includes credit application data for at least a subset of the plurality of features in the tree-based machine learning tree-based machine learning credit model 210.

In step 304, the model explanation system 102 applies the tree-based machine learning credit model 210 to the credit application data (i.e., executes the tree-based machine learning credit model 210 with the credit application data as input, to generate a credit score for the user of the borrower device).

In step 305, the model explanation system 102 determines whether the credit score generated in step 304 yields a negative credit decision. The model explanation system 102 can be configured to apply other factors to the score generated in step 304, such as debt to income ratio, loan to value, ratio, borrower income, and other credit policies, for example, to generate a credit decision. While the technology described and illustrated herein can be used to explain any type of score by a tree-based machine learning model, and/or a contribution of feature(s) to such score, for example, credit scoring is used herein for exemplary purposes only. In response to the model explanation system 102 determining that the generated credit decision is a negative one, the model explanation system 102 proceeds via the Yes branch to step 306.

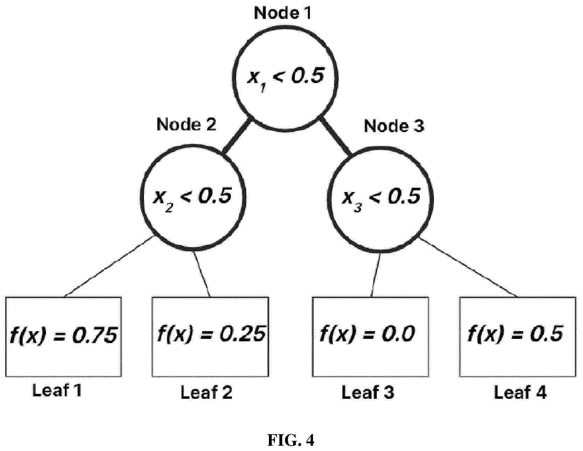

In step 306, for each subset of the plurality features in the tree-based machine learning credit model 210, the model explanation system 102 determines an attribution value on a feature basis (i.e., feature-by-feature) using the Shapley equation. It is to be understood that there can be one or more subsets of the plurality features in the tree-based machine learning credit model 210. The generation of the attribution values is described and illustrated in detail below with reference to FIG. 4.

In step 307, the model explanation system 102 identifies one or more adverse action reason codes based on the attribution values determined in step 306 (e.g., via the adverse action reason code module 216, as explained in more detail above). The model explanation system 102 can then report the credit application denial to the borrower device along with the adverse action reason codes to thereby provide an explanation for the credit application denial, which may be in satisfaction of federal laws. Then, the model explanation system 102 returns to step 303, wherein the model explanation system 102 may receive another credit application from another borrower device.

Alternatively, in step 305, in response to the model explanation system 102 determining that the generated credit decision is not a negative one, the model explanation system 102 proceeds via the No branch to step 308.

In step 308, the model explanation system 102 in turn reports an approval to the borrower device. Then, similar to step 307, the method 300 returns to step 303, wherein the model explanation system 102 may receive another credit application from a borrower device.

With an implementation of the method 300 illustrated in FIG. 3, one or more adverse action reason codes can be transmitted to the borrower device (e.g., any of client devices 106(1)-106(n) in FIG. 1) via one or more communication networks (e.g., communication network 104(1)) as a response to the credit application data sent by the user of the borrower device. It is to be understood that the return operation mentioned above merely indicate a new start of implementations of steps 303-307 or steps 303-308, which may be performed iteratively. However, the model explanation system 102 may perform the method 300 illustrated in FIG. 3 parallelly, with multiple threads in parallel for any number of borrower devices and credit applications.

As discussed above, the use of Shapley values in computations to explain machine learning models ensures accurate explainability, which is a key quality factor. The tree-based machine learning credit model 210 can be considered as a game in which individual features "cooperate" together to produce an output, which is a model prediction. Model explainability can explain how the tree-based machine learning credit model 210 made its score or output (i.e., a credit score generated in step 304 of FIG. 3) optionally yielding a decision based on the input (i.e., the credit application data received in step 303 of FIG. 3).

If the tree-based machine learning credit model 210 does not depend on a feature to generate its output, then that feature should receive zero attribution, no matter how high this feature correlates with other feature(s) of the tree-based machine learning credit model 210. The model explanation system 102 may attribute an output of the tree-based machine learning credit model 210 to each of input features by using Shapley values. Herein, the use of Shapley values (e.g., the Shapley equation utilized in step 307 of FIG. 3) may explain, for example, why the tree-based machine learning credit model 210 generates a credit score. For example, why the borrower that submitted the credit application in step 303 has been denied a loan, or why the tree-based machine learning credit model 210 determines a predicted high default rate (e.g., higher than average applicants).

To analyze and thereby figure out one or more potential underlying reasons (e.g., needs to increase income substantially, above average credit card debt, etc.), the model explanation system 102 may compare this specific borrower, also referred to as a target sample, with other applicants, also referred to as reference samples, utilizing Shapley values. The model explanation system 102 may compute Shapley values with respect to a comparison or background group, which serves as a "baseline" or a "reference" for the explanation.

As discussed above, the reference samples stored in borrower database 110 may include credit application data or other related data of a plurality of different groups of applicants, which may be retrieved by the model explanation system 102. With the Shapley values, the model explanation system 102 can attribute how much of a difference between a specific borrower and the comparison group are accounted for by each feature in the tree-based machine learning credit model 210. For example, with a predicted 70% default rate by a specific borrower, assuming an average predicted default rate is 10% in the comparison group, then there is a 60% difference that can be explained by Shapley values to indicate a high contribution to the denial by the default rate feature. As an example, by measuring an average marginal contribution of each feature to the overall 60% difference, which will be described in detail below, Shapley may assign 40% to the borrower's credit card debt, 15% to the low net worth, and 5% to a low income in retirement.

For a given feature, the Shapley value is an average marginal contribution of this feature to the overall model score (i.e., the model output), by taking into account all possible combinations. To formulate the Shapley value for the tree-based machine learning credit model 210, assuming there are n features 1, 2, ..., n, wherein a value function f takes an input including a subset S of the features and returns the model output, then the average marginal contribution Φ of feature I, which is the Shapley equation utilized in step 306 of FIG. 3, is defined as:

$$\phi_i = \sum_{S \subseteq N\setminus\{i\}} \frac{|S|!\,(M - |S| - 1)!}{M!} [f_x(S \cup \{i\}) - f_x(S)] \qquad (1)$$

Wherein, $fx(S)$ is a score achieved by constructing the $M$ feature values of x by combining the subset (or coalition) of S features' values taken from the test sample and the M-|S| complement subset of features' values taken from the intervening reference sample,

S is a coalition or subset of features 1, 2, ..., n,

$f_x(S \cup \{i\})$ - $f_x(S)$ is the marginal contribution,

$\frac{|S|!(M-|S|-1)!}{M!} f_x(S \cup \{i\})$ is a positive part of equation (1), indicating a positive impact of Shap values on a prediction,

$\frac{|S|!\,(M - |S| - 1)!}{M!} f_x(S)$ is a negative part of equation (1), indicating a negative impact of Shap values on a prediction,

the magnitude of $\phi_i$ is a measure of how strong the effect of feature I is.

Continuing with the above example of the predicted 70% default rate by this specific borrower, assuming feature i is the borrower's income, the Shapley equation (1) may facilitate an understanding of how important the borrower's income is, in determining the tree-based machine learning credit model 210's score in step 304 of FIG. 3. For a given subset features S, the marginal contribution can tell how much the inclusion of the borrower's income (i.e., feature i) to the tree-based machine learning credit model 210changes the model's output, as compared to the model's output without feature i as the input data.

In other words, the marginal contribution captures the incremental contribution of a given feature (e.g., income) to a model's output while accounting for its interaction with other features (e.g., the features of credit card debt and net worth in the example discussed above). Therefore, the contribution $\phi_i$ is a weighted average of all such marginal contributions over varying S. It is to be understood that computations of such marginal contributions are a key portion of Shapley value computations. The selection of coalitions or subsets of features, i.e., S, in the above Shapley equation (1), scales exponentially with the number of features. This creates a significant computational challenge when using Shapley values in an explanation solution to interpret a tree-based machine learning model, resulting in intractable computational runtime and efficiently.

Consider a depth 2 decision tree as illustrated in FIG. 4 as an example. The decision tree defines the computational logic for a model to follow when making a decision. In this example, consider $M=4$ with feature space x = {$x_1$, $x_2$, $x_3$, $x_4$}, a single test sample $x^{test} = \{x^{test}_1, x^{test}_2, x^{test}_3, x^{test}_4\}$, and reference sample $x^{ref} = \{x^{ref}_1, x^{ref}_2, x^{ref}_3, x^{ref}_4\}$. A brute force approach will loop over all possible feature coalitions and calculate respective contributions. Because the number of subsets (coalitions) is an exponential function of the number of features $M$, as discussed above, the brute force approach cannot be used in a practical scenario. In other words, the computational complexity and required resources for large tree-based machine learning models will be prohibitive for producing an explanation with this brute force approach.

Continuing with the above borrower's example, with the income as feature i, interventional Shapley (SHAP) with O(TLR) runtime complexity can use samples or references of the other features, i.e., the credit card debt and net worth, to compute the contribution $\phi_i$. In this case, the model explanation system 102 may retrieve reference samples from a general reference population (e.g., one or more comparison groups discussed above) from for example the borrower database 110 in FIG. 1. By replacing a part of the computations with the retrieved reference samples, calculations of the contribution $\phi_i$ may be simplified and more efficient to a certain extent.

In interventional SHAP O(TLR), the tree structure is exploited to reduce the computation complexity. In this manner, calculations of Shapley values are made feature-by-feature, reference-by-reference and tree-by-tree within the tree-based model. As illustrated above, the Shapley equation (1) can be broken into a positive part and a negative part. During the computation process, whether a combination of features (i.e., S) could reach a leaf of a tree is considered, instead of whether a test input data or references could reach a leaf.

Therefore, for each leaf of a given tree structure, the splits of the tree can be reviewed, leaf-by-leaf, to find out all combination(s) of features. With the scenario illustrated in FIG. 3, the borrower's credit application data can be testing input data to the tree-based machine learning credit model 210. Then, the Shapley equation (1) can be simplified as if only the features involved in the splits leading to a given leaf are related in the computations. Moreover, for a given leaf, there is no attribution for a feature if both the test and the reference reach that leaf. However, even such simplified computations are still impractical for a real-time use in the scenario illustrated in FIG. 3, because it is still not a computationally efficient algorithm for commonly large reference sample populations.

Consider an example wherein a single test input data needs to be explained by ten reference samples. It is to be understood that since a tree model uses features in non-linear and interactive manners, the underlying model decision surface for which Shapley value is explaining is non-linear and interactive as well. This means the ten references cannot be averaged as one compositional reference. Instead, the ten references need to be separately computed reference-by-reference, then the obtained contributions are averaged to estimate an average attribution for the single test input data.

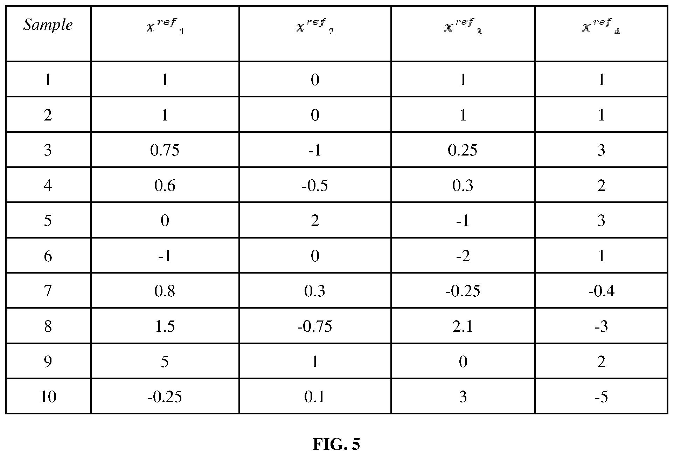

FIG. 5 illustrates an exemplary computation complexity for ten $x^{ref}$ samples for the exemplary decision tree in FIG. 4. Herein, for each $x^{ref}$, an attribution value will be calculated, which then will be averaged with the equation (1) illustrated above. As shown in FIG. 5, repeated calculations are made for samples 1 and 2. For samples 3 and 4, even though the values of the two samples are different, the calculated interventional Shapley values are identical from a perspective of the decision tree. This is because all the node split conditions are evaluated to be the same for samples 3 and 4. Accordingly, computations illustrated in FIG. 5 can be simplified. For example, computations of the samples 3 and 4 suggest that a feature value table can be created from a different perspective, i.e., the node split conditions perspective, as will be explained in more detail below.

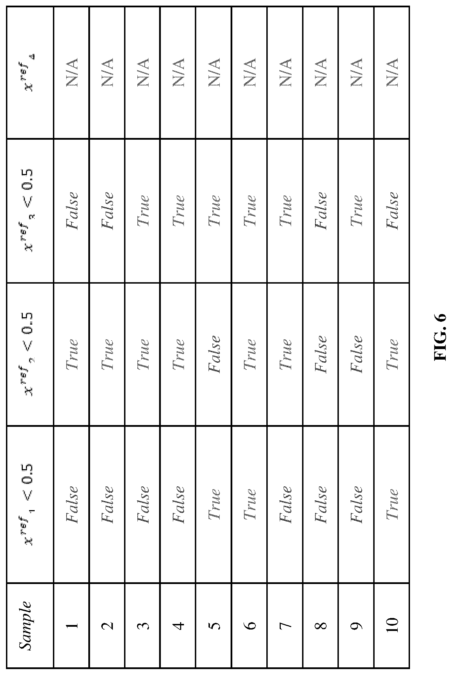

FIG. 6 illustrates evaluation of ten $x^{ref}$ samples from a perspective of node split conditions of the exemplary decision tree in FIG. 4. FIG. 6 illustrates the feature value(s) of the reference samples that may produce the same interventional Shapley values for a given test sample. It is to be understood that samples that meet the same split conditions will yield the same interventional Shapley values on a test sample. Then, by keeping track of a count of which reference samples satisfy which node split conditions and performing computations only on those identified by traversal conditions, calculation complexity may be reduced. For the decision tree illustrated in FIG. 4, there are only $2^3 = 8$ possible permutations from the viewpoint of node split conditions.

In this way, the interventional Shapley value calculation can be simplified. However, the growth in possible permutations defined or determined based on the node split conditions is a double exponential in depth ($2^N = 2^{2^D-1}$, wherein N is the number of non-leaf nodes, and D is the tree depth). This means with just a depth 4 decision tree, there are already 215 computations, making the approach impractical.

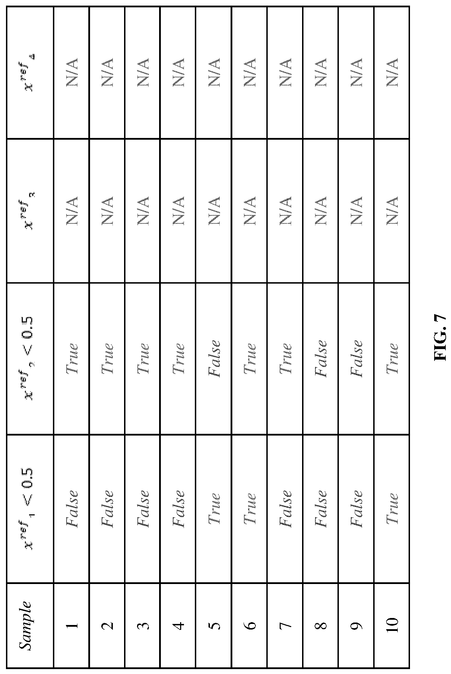

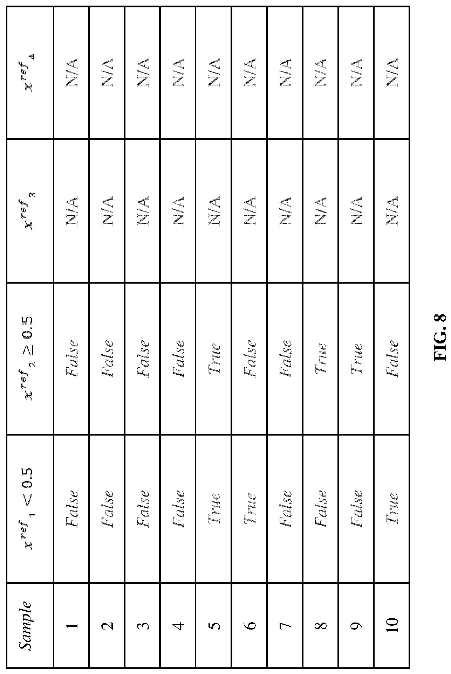

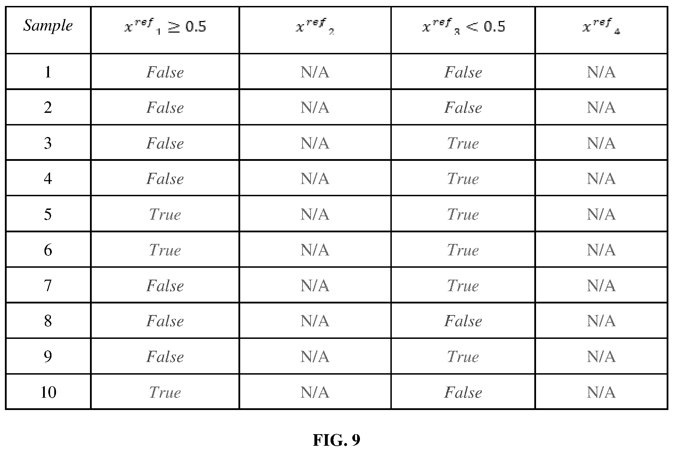

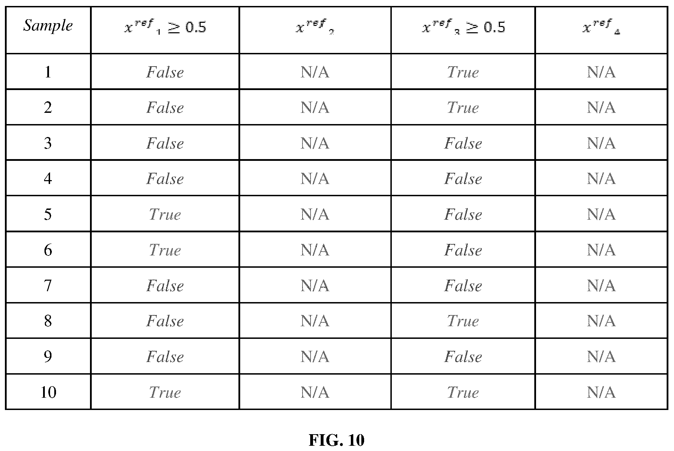

FIGS. 7 illustrates evaluation of ten $x^{ref}$ samples based on node split conditions of the exemplary decision tree in FIG. 4, wherein the node split conditions lead to a leaf 1. FIGS. 8 illustrates evaluation of ten $x^{ref}$ samples based on node split conditions of the exemplary decision tree in FIG. 4, wherein the node split conditions lead to a leaf 2. FIGS. 9 illustrates evaluation of ten $x^{ref}$ samples based on node split conditions of the exemplary decision tree in FIG. 4, wherein the node split conditions lead to a leaf 3. FIGS. 10 illustrates evaluation of ten $x^{ref}$ samples based on node split conditions of the exemplary decision tree in FIG. 4, wherein the node split conditions lead to a leaf 4.

FIGS. 7-10 illustrate an approach of the technology described and illustrated herein to compute attribution values from a leaf-wise perspective. In other words, instead of creating and maintaining a single table for each decision tree within a tree-based model, a table is created for each leaf of each decision tree. Then, the computations can focus on only the features involved in leading to each given leaf. This means the parts of the Shapley values that each leaf contributes to the total model output (or score) are considered during the computations. Instead of eight possible permutations from the perspective of node split conditions as illustrated in FIG. 6, tables created with the leaf-wise concept as shown in FIGS. 7-10 may reduce to only 4 permutations for the exemplary decision tree in FIG. 4.

Practically, a typical number of reference samples can be $10^3 \sim 10^5$. Then, for relatively shallow tree structures (e.g., D < 10), which is common for gradient-boosted algorithms (e.g., XGboost, ILightGBM, CatBoost), the Shapley value computation advantageously becomes practical for real-time uses cases, such as explained herein with reference to FIG. 3. In addition to real-time uses cases in production, this technology also facilitates efficient offline design, testing, and reporting of tree-based machine learning models as a result of the ability with this technology to generate accurate feature contributions much faster than is currently possible.

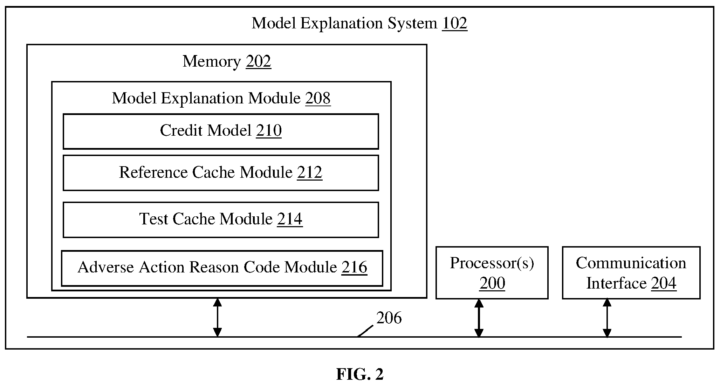

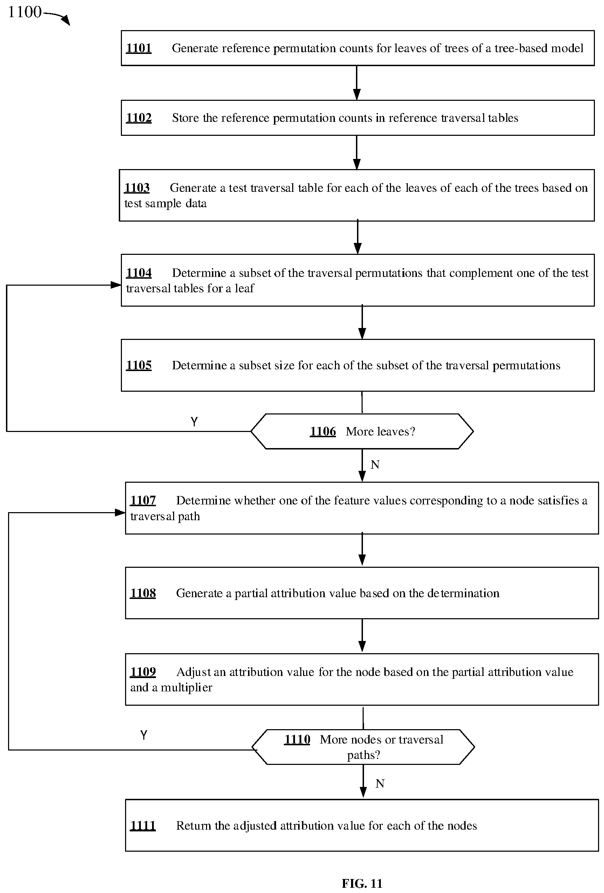

Referring now to FIG. 11, a flow diagram of an exemplary method 1100 for explaining tree-based models using interventional Shapley values is illustrated. In some examples, the method illustrated in FIG. 11 can be used to determine the attribution values for the features in step 306 of FIG. 3. In step 1101 in this example, the model explanation system 102 generates reference permutation counts for each leaf of a decision tree of a tree-based machine learning model. It is to be understood that as discussed above, a tree-based machine learning model (e.g., the credit model 210 in FIG. 2) may have a plurality of decision trees based on which a score (e.g., the credit score generated in step 304 of FIG. 3) can be made. Herein, each reference permutation count indicates or represents a number of reference samples that satisfy a traversal permutation for a leaf. Therefore, for each leaf, for example, leaves 1-4 in FIG. 4, a pre-calculation of how many reference samples fall into each traversal permutation can be determined by the model explanation system 102.

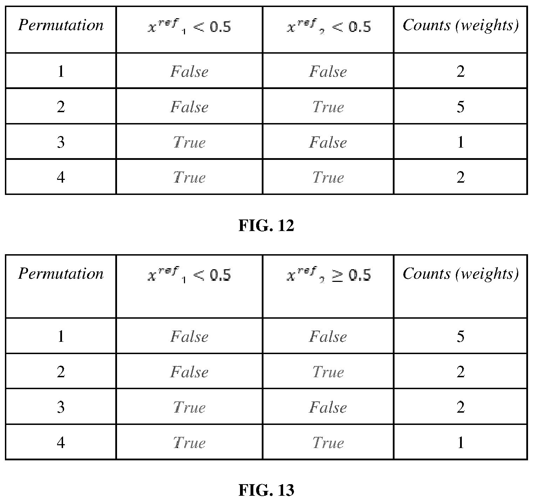

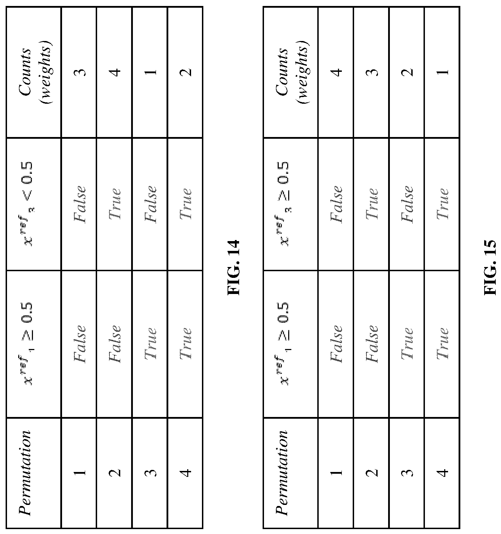

In step 1102, the model explanation system 102 stores the generated reference permutation counts in reference traversal tables. FIG. 12 illustrates a reference traversal table created for leaf 1 of the exemplary decision tree in FIG. 4. FIG. 13 illustrates a reference traversal table created for leaf 2 of the exemplary decision tree in FIG. 4. FIG. 14 illustrates a reference traversal table created for leaf 3 of the exemplary decision tree in FIG. 4. FIG. 15 illustrates a reference traversal table created for leaf 4 of the exemplary decision tree in FIG. 4. As illustrated in FIGS. 12-15, as discussed above, for the exemplary decision tree in FIG. 4, there are four traversal permutations in total for each of leaves 1-4. Taking FIG. 12 as an example, reference permutation counts for each of the four traversal permutations have been counted in step 1101. As shown in FIGS. 12-15, each reference traversal table includes a row for each traversal permutation, wherein each row has corresponding split condition Booleans, although other values representing true or false conditions can also be used.

In step 1103, the model explanation system 102 generates a test traversal table for each leaf of each tree based on test sample data (e.g., the credit application data received in step 303 of FIG. 3. Similarly, there can be a plurality of trees each comprising a plurality of leaves. It is to be understood that the decision tree illustrated in FIG. 4 is a simplified tree structure provided for ease of introducing the technology in this disclosure. In a practical applicable scenario, a decision tree could have a more complicated structure than the simplified decision tree in FIG. 4, including more depth, nested trees, more nodes, etc.

Assuming test sample data $x^{test}_1 = 1$, $x^{test}_2 = 0$, $x^{test}_3 = 1$, $x^{test}_4 = 1$, a similar traversal table can be created for each leaf. Herein, the test sample data comprises a feature value for one or more nodes of the tree-based machine learning model. In this example, for ease of understanding, there are four nodes in total. Herein, each node corresponds to one feature of the tree-based machine learning model. It is to be understood that in a practical applicable scenario, as illustrated above in equation (1), there could be more features in the model.

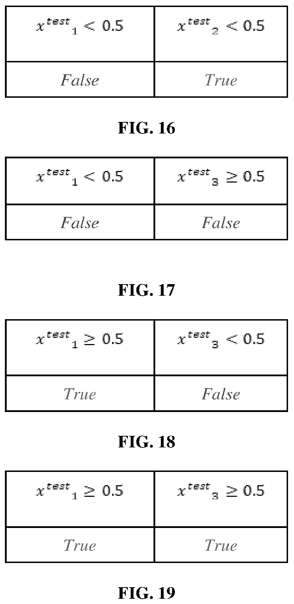

FIG. 16 illustrates a test traversal table created for leaf 1 of the exemplary decision tree in FIG. 4. FIG. 17 illustrates a test traversal table created for leaf 2 of the exemplary decision tree in FIG. 4. FIG. 18 illustrates a test traversal table created for leaf 3 of the exemplary decision tree in FIG. 4. FIG. 19 illustrates a test traversal table created for leaf 4 of the exemplary decision tree in FIG. 4. As illustrated in FIGS. 16-19, similarly to FIGS. 12-15, each test traversal table comprises split condition Booleans for related nodes involved in a traversal path leading to a corresponding leaf of the decision tree. To differentiate from the split condition Booleans of the references in FIGS. 12-15, the former is referred to as first split condition Booleans, and the ones relating to test sample data in FIGS. 16-19 are referred to as second split condition Booleans in this disclosure. It's to be understood that in a more complex practical applicable scenario, there could be more rows indicating or representing more traversal permutations (i.e., more traversal paths) leading to a leaf and therefore there can be a larger set of split condition Booleans in the table created for that leaf.

In step 1104, for each leaf, the model explanation system 102 determines a subset of the traversal permutations that complement a test traversal table. Herein, a subset of the traversal permutations complements a test traversal table if a swap of one or more of the second split condition Booleans (e.g., the ones in FIGS. 16-19) with one or more of the first split condition Booleans (e.g., the ones in FIGS. 12-15) corresponding to one of the subset of the traversal permutations can lead to a traversal to the leaf. In other words, for each leaf, the relevant reference traversal permutation(s), and therefore the permutation row(s) of a reference traversal table, are only those whose intervention can lead to the leaf by satisfying all the split conditions. Herein, in a situation that node conditions for the test sample data and reference traversal permutation are both false for a feature, then the reference traversal permutation is irrelevant.

Taking FIGS. 12 and 16 as an example. For leaf 1, interventions (i.e., coalitional swaps) of permutation 1 indicated in FIG. 12 are [*False, Ø*], [*Ø, False*], and [*False, False*]. However, applying those interventions to the split condition Booleans (i.e., [*False, True*]) indicated in FIG. 16, will not lead to a traversal path to leaf 1 (i.e., [*True, True*] based on the decision tress in FIG. 4). Similarly, for leaf 1, interventions (i.e., coalitional swaps) of permutation 2 indicated in FIG. 12 are [*False, Ø*], [*Ø, True*], [*False, True*], applying any of those to the split condition Booleans (i.e., [*False, True*]) indicated in FIG. 16 also will not lead to a traversal path to leaf 1. However, with permutation 3 having a *True* in the first position and permutation 4 having a *True* in both the first and second positions, applying those interventions would lead to all split conditions *True* for the test sample data at leaf 1. Therefore, permutation 3 and permutation 4 are relevant and the subset in this example includes traversal permutations 3 and 4.

In step 1105, the model explanation system 102 determines a subset size (i.e., S in the equation (1)) for each of the subset of the traversal permutations determined in step 1104. The subset size refers to the number of features swapped in complements for a test traversal table. Continuing to refer to the above example, wherein the subset includes traversal permutations 3 and 4 in FIG. 12, for permutation 3, the subset of size |S| = 1. For permutation 4, the subset size is ISI = 0. Herein, if both test sample data and reference traversal permutation meet the condition (i.e., the second *"True"* in permutation 4 of FIG. 12 and the *"True"* in FIG. 16), based on the Shapely values' inherent characteristics, the subset size is not influenced, and this feature is irrelevant. In other words, there is an attribution, only when a change from a test sample data to the reference occurs.

In step 1106, the model explanation system 102 determines whether there are any more leaves to perform the operations in step 1104 and 1105. If there are, the process returns and repeat steps 1104 and 1105 until related determinations have been made for all the leaves of a decision tree. In a situation that there are more than one decision tree, then the process may be performed for each of the decision trees sequentially. Alternatively, separate processes for one or more decision trees may be made parallelly, or with multiple threads. If determinations have been made for all the leaves, the process proceeds to step 1107.

In step 1107, for each leaf and each node in a second traversal path, the model explanation system 102 determines whether one of the feature values corresponding to a node satisfies a traversal path. In other words, for each leaf and each feature involved in reaching the leaf, the model explanation system 102 determines whether a feature value of the test sample data for that given feature could reach the given leaf. For example, continuing to refer to the example in FIGS. 12 and 16, with the test sample data $x^{test}_1=1$, $x^{test}_2=0$, $x^{test}_3=1$, $x^{test}_4=1$, $x_1$ will not lead to leaf 1 while $x_2$ leads to leaf 1.

In step 1108, the model explanation system 102 generates a partial attribution value based on the determination made in step 1107. Herein, the partial attribution value corresponds to a term of the Shapley equation (1) and is calculated based in part on the subset size S determined in step 1105.

In an example, the partial attribution value corresponds to a negative term of the Shapley equation (1), i.e.,

$$-\frac{|S|!\,(M-|S|-1)!}{M!}f_x(S)$$ , when a feature value corresponding to a node fails to satisfy the second traversal path (i.e., fails to reach the leaf). The partial attribution value may correspond to a positive term of the Shapley equation (1), i.e.,

$$\frac{|S|!\,(M-|S|-1)!}{M!}f_x(S \cup \{i\})$$ , when a feature value corresponding to a node satisfies the second traversal path (i.e., could reach the leaf).

Continuing to refer to the example in FIGS. 12 and 16, for the traversal path to leaf 1, permutation 3 corresponds to a subset of size $|S| = 1$. As discussed above, for $x_1$ the test sample value will not lead to leaf 1, therefore the partial attribution is $-\frac{|S|!\,(M - |S| - 1)!}{M!} f_x(S)$ in the Shapley equation (1). Alternatively, for $x_2$ the test value leads to the leaf, therefore the partial attribution is $\frac{|S|!\,(M - |S| - 1)!}{M!} f_x(S \cup \{i\})$ in the Shapley equation (1). For permutation 4, only $x_1$ is relevant because there is no change in conditions for $x_2$. Specifically, it is True for both the test sample data and the traversal permutation, which means both the test and reference permutation meet the condition resulting in no influence in the subset size. As discussed above, for permutation 4 the relevant subset size is $|S| = 0$. Therefore, the negative partial contribution of $x_1$ is $-\frac{|S|!\,(M - |S| - 1)!}{M!} f_x(S)$.

In step 1109, the model explanation system 102 adjusts an attribution value for the node, which corresponds to a feature, based on the partial attribution value and a multiplier corresponding to one of the reference permutation counts. This calculation is made for both each of the leaves and each of the traversal permutations such that the partial attribution values for a feature for each of the traversal permutations are added or subtracted to a stored attribution value resulting in a final attribution value for the feature, s (e.g., the counts) may be set by the model explanation system 102 when making the adjustment in step 1109. For example, weights can be set for different feature(s), or for different reference permutation(s).

In step 1110, the model explanation system 102 determines whether there are more nodes or traversal paths to determine the partial attribution values. If there are, the process will return to step 1107 and repeat operations in steps 1107-1109, otherwise, the process proceeds to step 1111.

In step 1111, the model explanation system 102 may return the adjusted attribution value for each of the nodes corresponding to model features. Thus, the partial attribution values generated in step 1108 can be multiplied by the reference permutation counts (e.g., in FIGS. 12-15) for each leaf, which then are added from the leaf to the total for the test sample data, with the total representing an array or vector of contribution values for each feature. It is to be understood that the adjusted attribution value in step 1109 may represent a contribution of the features to the score (e.g., the credit score of step 304 of FIG. 3). As explained above with reference to FIG. 3, the model explanation system 102 can then output an explanation of a decision made in part on the score, with the explanation generated based on one or more of the final adjusted attribution values.

As discussed above, the process illustrated in FIG. 11 is performed for each leaf of a decision tree, on a feature by feature and leaf-by-leaf basis. It is to be understood that operations described herein can also be performed for each of a plurality of trees with a tree-based machine learning model.

The process illustrated in FIG. 11 is based on a leaf-wise approach described and illustrated in this disclosure, which significantly reduces computational complexity. In the example described in conjunction with FIGS. 11-19, for each leaf, $2^D$ reference permutation counts corresponding to each traversal permutation, or weights associated with the number of references, are stored in the created reference traversal tables.

In some examples, optimized approaches can be used to further reduce the computational complexity. Considering that there are only $2^D$ possible traversal permutations (four in the examples illustrated in FIGS. 12-15) for reference samples leading to a given leaf, there are also only $2^D$ test sample traversal permutations leading to that given leaf. Because the partial contribution values from each leaf are summed to form the full interventional Shapley value for a feature the test sample data, averaging the partial contributions at the leaf level in advance advantageously further reduces computation runtime.

Therefore, in some examples, all $2^D$ of the possible test traversal permutations that could have reached the leaf under reference sample intervention are considered by the model explanation system 102. Then, for each of the $2^D$ possible test traversal permutations, the average partial attribution that would have occurred at the leaf over all reference samples are calculated, which is also referred to as reference-averaged partial contributions. Then, the pre-calculated reference-averaged partial contributions are stored in the created reference traversal tables for each leaf. Such pre-calculation has a memory requirement $2^D D$ for each leaf. Then, for given test sample data, the computation approach can include visiting each leaf and looking up the associated partial attribution values stored in each leaf's cached or stored reference traversal table and adding those associated partial attributions to the total attribution (i.e., adjusting an attribution value as described above with reference to FIG. 11).

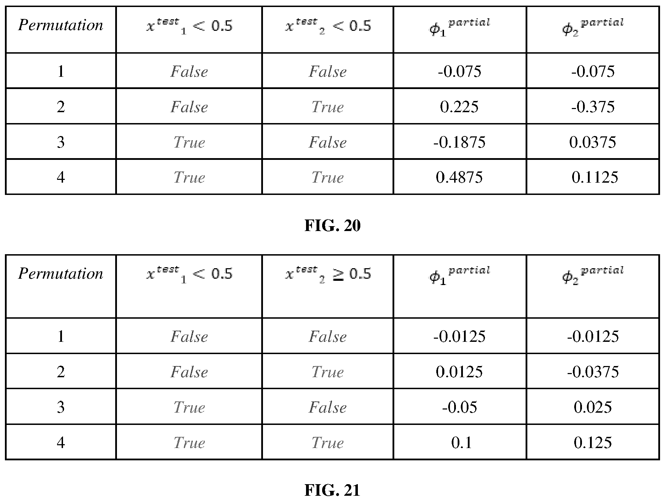

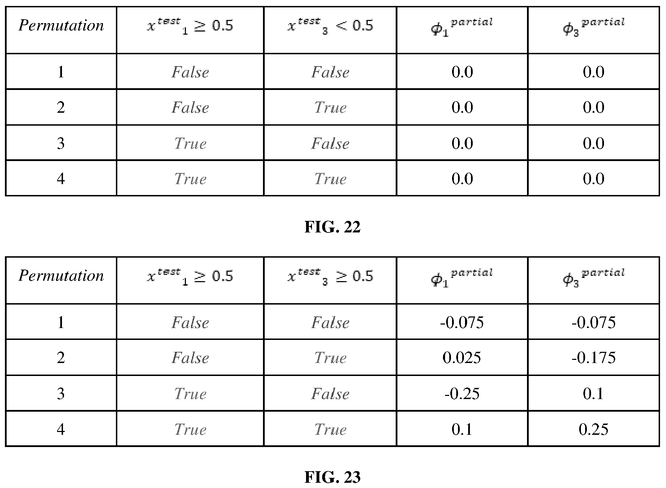

FIG. 20 illustrates another reference traversal table comprising pre-calculated reference-averaged partial contributions created for leaf 1 of the exemplary decision tree in FIG. 4. FIG. 21 illustrates another reference traversal table comprising pre-calculated reference-averaged partial contributions created for leaf 2 of the exemplary decision tree in FIG. 4. FIG. 22 illustrates another reference traversal table comprising pre-calculated reference-averaged partial contributions created for leaf 3 of the exemplary decision tree in FIG. 4. FIG. 23 illustrates another reference traversal table comprising pre-calculated reference-averaged partial contributions created for leaf 4 of the exemplary decision tree in FIG. 4. In FIGS. 20-23, the pre-calculated reference-averaged partial contributions are made based on the ten reference samples illustrated in FIG. 5 and the depth 2 decision tree in FIG. 4.

Specifically, the model explanation system 102 can generate partial attribution values for each of the nodes (representing features) sample-by-sample, for each of the ten reference samples, for each traversal permutation illustrated in each reference traversal table in FIGS. 20-23 for each of leaves 1-4. Then, the model explanation system 102 generates the averaged partial attribution values based on the partial attribution values of the reference samples. The model explanation system 102 then appends the calculated averaged partial attribution values to each of the rows in each reference traversal table, as shown in FIGS. 20-23.

By calculating the reference-averaged partial contributions in advance, the operations performed in steps 1107-1109 may be omitted. Then, for each node in a second traversal path to each of the leaves 1-4 in the decision tree of FIG. 4, the model explanation system 102 can adjust an attribution value for the node based on an average partial attribution value for the node based on the corresponding value in the reference traversal table. Then, the model explanation system 102 can output an explanation of the score generated based on one or more of the adjusted attribution values.

Accordingly, as described and illustrated by way of the examples herein, this technology proposes a leaf-wise concept in Shapely values calculations, and advantageously reduces computation time. The reduced computational complexity and efficiency allows a practical use of Shapley values in explaining machine learning models. In some further examples, pre-computation is performed placing each reference sample into a traversal permutation relevant to a given leaf, and this is made for each leaf of a decision tree. This would further reduce the computation time. By proposing a practical use of Shapley values in machine leaning model explanation, key features of Shapley value can be leveraged in the explanation, for example, Dummy, Completeness/Efficiency, Symmetry, Monotonicity, and Linearity.

Thus, this technology advantageously applies interventional Shapley values to tree-based models, in a manner that offers exceptional performance benefits. These benefits enable feasible usage across a number of real-world applications, including the credit scoring and decisioning application described and illustrated by way of example herein, and unlock the strong theoretical and academic benefits to interventional Shapley values. This technology drastically lowers computational runtime performance and is agnostic to particular processes and systems to provide high-quality Shapley value-based explanations for tree-based models.

Having thus described the basic concept of the invention, it will be rather apparent to those skilled in the art that the foregoing detailed disclosure is intended to be presented by way of example only and is not limiting. Various alterations, improvements, and modifications will occur and are intended to those skilled in the art, though not expressly stated herein. These alterations, improvements, and modifications are intended to be suggested hereby, and are within the spirit and scope of the invention. Additionally, the recited order of processing elements or sequences, or the use of numbers, letters, or other designations, therefore, is not intended to limit the claimed processes to any order except as may be specified in the claims. Accordingly, the invention is limited only by the following claims and equivalents thereto.

**Claims**

1. A method implemented by a model explanation system and comprising, in response to a score generated by a tree-based machine learning model:

   generating reference permutation counts for each of a plurality of leaves of each of a plurality of trees of the tree-based machine learning model, wherein each of the reference permutation counts represents a number of reference samples that satisfy a first one of a plurality of traversal permutations for a first one of the leaves;
   storing the reference permutation counts in reference traversal tables that include a row for each of the traversal permutations and first split condition values corresponding to each of the traversal permutations;
   generating a test traversal table for each of the leaves of each of the trees based on test sample data, wherein the test sample data comprises a feature value for one or more of a plurality of nodes of the tree-based model and each of the test traversal tables comprises second split condition values for each of one or more of the nodes of one of the trees in a first traversal path to a second one of the leaves of the one of the trees;
   for each of the leaves, determining a subset size for each of a subset of the traversal permutations that complement one of the test traversal tables for the leaf, wherein one of the subset of the traversal permutations complements the one of the test traversal tables when a swap of one or more of the second split condition values with one or more of the first split condition values corresponding to the one of the subset of the traversal permutations leads to a traversal to the leaf;
   for each of the nodes in a second traversal path to each of the leaves:

generating a partial attribution value based on whether one of the feature values corresponding to the node satisfies the second traversal path, wherein the partial attribution value corresponds to a term of a Shapley equation and is based in part on the subset size;

adjusting an attribution value for the node based on the partial attribution value and a multiplier corresponding to one of the reference permutation counts; and

outputting an explanation of the score generated based on one or more of the adjusted attribution values.

2. The method of claim 1, wherein the tree-based machine learning model comprises a credit model and the method further comprises:

training the tree-based machine learning model on a borrower data set including first borrower data for each of the reference samples, wherein the test sample data comprises credit application data;

deploying the trained tree-based machine learning model in a network environment; and

receiving the credit application data from a client device via one or more communication networks before applying the deployed tree-based machine learning model to generate the score.

3. The method of claim 2, further comprising:

determining that the credit application is denied based in part on the score;

identifying one or more adverse action reason codes based on the one or more of the adjusted attribution values, wherein the explanation comprises the adverse action reason codes; and

providing the adverse action reason codes to the client device via the communication networks.

4. The method of any one of claims 1 to 3, wherein each of the nodes corresponds to one of a plurality of features of the tree-based machine learning model and each of the adjusted attribution values represent a contribution of one of the features to the score.

5. The method of any one of claims 1 to 4, wherein the partial attribution value corresponds to a negative term of the Shapley equation when the one of the feature values corresponding to the node fails to satisfy the second traversal path and the partial attribution value corresponds to a positive term of the Shapley equation when the one of the feature values corresponding to the node satisfies the second traversal path.

6. The method of any one of claims 1 to 5, wherein the one of the reference permutation counts is for both the leaf and a second one of the traversal permutations.

7. A method implemented by a model explanation system and comprising, in response to a score generated by a tree-based machine learning model:

generating reference permutation counts for each of a plurality of leaves of each of a plurality of trees of the tree-based machine learning model, wherein each of the reference permutation counts represents a number of reference samples that satisfy a first one of a plurality of traversal permutations for a first one of the leaves;

storing the reference permutation counts in reference traversal tables that include a row for each of the traversal permutations and first split condition values corresponding to each of the traversal permutations;

generating a test traversal table for each of the leaves of each of the trees based on test sample data, wherein the test sample data comprises a feature value for one or more of the nodes and each of the test traversal tables comprises second split condition values for each of one or more nodes of one of the trees in a first traversal path to a second one of the leaves of the one of the trees;

for each of the leaves, determining a subset size for each of a subset of the traversal permutations that complement one of the test traversal tables for the leaf, wherein one of the subset of the traversal permutations complements the one of the test traversal tables when a swap of one or more of the second split condition values with one or more of the first split condition values corresponding to the one of the subset of the traversal permutations leads to a traversal to the leaf;

for each of the nodes in a second traversal path to each of the leaves, adjusting an attribution value for the nodes based on an average partial attribution value for the node in one of the reference traversal table; and

outputting an explanation of the score generated based on one or more of the adjusted attribution values.

8. The method of claim 7, further comprising:

generating partial attribution values for each of the nodes for each of the reference samples for each of the traversal permutations for each of the leaves;

generating the average partial attribution values based on the partial attribution values; and

appending a subset of the average partial attribution values to each of the rows of each of the reference traversal tables for each of the leaves.

**9.** The method of any one of claims 7 to 8, wherein the tree-based machine learning model comprises a credit model and the method further comprises:

training the tree-based machine learning model on a borrower data set including first borrower data for each of the reference samples, wherein the test sample data comprises credit application data; and

deploying the trained tree-based machine learning model in a network environment; and

receiving the credit application data from a client device via one or more communication networks before applying the deployed tree-based machine learning model to generate the score.

**10.** The method of claim 9, wherein further comprising:

determining that the credit application is denied based in part on the score;

identifying one or more adverse action reason codes based on the one or more of the adjusted attribution values, wherein the explanation comprises the adverse action reason codes; and

providing the adverse action reason codes to the client device via the communication networks.

**11.** The method of any one of claims 7 to 10, wherein each of the nodes corresponds to one of a plurality of features of the tree-based machine learning model and each of the adjusted attribution values represent a contribution of one of the features to the score.

**12.** The method of claims 8, wherein the partial attribution value corresponds to a negative term of a Shapley equation when the one of the feature values corresponding to the node fails to satisfy the second traversal path and the partial attribution value corresponds to a positive term of the Shapley equation when the one of the feature values corresponding to the node satisfies the second traversal path.

**13.** The method of any one of claims 7 to 12, wherein the one of the reference permutation counts is for both the leaf and a second one of the traversal permutations.

**14.** A model explanation system, comprising memory comprising instructions stored thereon and one or more processors configured to execute the stored instructions to perform the method of any one of claims 1 to 13.

**15.** A non-transitory computer readable medium having stored thereon instructions comprising executable code that, when executed by one or more processors, causes the processors to perform the method of any one of claims 1 to 13.

**FIG. 1**

**FIG. 2**

Model Explanation System 102

Memory 202

Model Explanation Module 208

Credit Model 210

Reference Cache Module 212

Test Cache Module 214

Adverse Action Reason Code Module 216

Processor(s) 200

Communication Interface 204

206

$300 \longrightarrow$

**301** Train a tree-based machine learning credit model on a borrower data set including a plurality of reference samples each including borrower data for one or more of a plurality of features

**302** Deploy the tree-based machine learning credit model in a production network environment

**303** Receive from a borrower device a credit application including credit application data for at least a subset of the plurality of features

**304** Apply the tree-based machine learning credit model to the credit application data to generate a credit decision

**305** Negative credit decision?

N → **308** Report approval to the borrower device

Return to

Y → **306** Determine an attribution value for each of one or more of the subset of the plurality of features using the Shapley equation

**307** Identify one or more adverse action reason codes based on the attribution values

Return to

**FIG. 3**

FIG. 4

| Sample | $x^{ref}_1$ | $x^{ref}_2$ | $x^{ref}_3$ | $x^{ref}_4$ |
|--------|-------------|-------------|-------------|-------------|
| 1 | 1 | 0 | 1 | 1 |
| 2 | 1 | 0 | 1 | 1 |
| 3 | 0.75 | -1 | 0.25 | 3 |
| 4 | 0.6 | -0.5 | 0.3 | 2 |
| 5 | 0 | 2 | -1 | 3 |
| 6 | -1 | 0 | -2 | 1 |
| 7 | 0.8 | 0.3 | -0.25 | -0.4 |
| 8 | 1.5 | -0.75 | 2.1 | -3 |
| 9 | 5 | 1 | 0 | 2 |
| 10 | -0.25 | 0.1 | 3 | -5 |

**FIG. 5**

| Sample | $x^{ref}_1 < 0.5$ | $x^{ref}_2 < 0.5$ | $x^{ref}_3 < 0.5$ | $x^{ref}_4$ |
|--------|-------------------|-------------------|-------------------|-------------|
| 1 | False | True | False | N/A |
| 2 | False | True | False | N/A |
| 3 | False | True | True | N/A |
| 4 | False | True | True | N/A |
| 5 | True | False | True | N/A |
| 6 | True | True | True | N/A |
| 7 | False | True | True | N/A |
| 8 | False | False | False | N/A |
| 9 | False | False | True | N/A |
| 10 | True | True | False | N/A |

**FIG. 6**

| Sample | $x^{ref}_1 < 0.5$ | $x^{ref}_2 < 0.5$ | $x^{ref}_3$ | $x^{ref}_4$ |
|---|---|---|---|---|
| 1 | False | True | N/A | N/A |
| 2 | False | True | N/A | N/A |
| 3 | False | True | N/A | N/A |
| 4 | False | True | N/A | N/A |
| 5 | True | False | N/A | N/A |
| 6 | True | True | N/A | N/A |
| 7 | False | True | N/A | N/A |
| 8 | False | False | N/A | N/A |
| 9 | False | False | N/A | N/A |
| 10 | True | True | N/A | N/A |

**FIG. 7**

| Sample | $x^{ref}_1 < 0.5$ | $x^{ref}_2 \geq 0.5$ | $x^{ref}_3$ | $x^{ref}_4$ |
|---|---|---|---|---|
| 1 | False | False | N/A | N/A |
| 2 | False | False | N/A | N/A |
| 3 | False | False | N/A | N/A |
| 4 | False | False | N/A | N/A |
| 5 | True | True | N/A | N/A |
| 6 | True | False | N/A | N/A |
| 7 | False | False | N/A | N/A |
| 8 | False | True | N/A | N/A |
| 9 | False | True | N/A | N/A |
| 10 | True | False | N/A | N/A |

**FIG. 8**

| Sample | $x^{ref}_1 \geq 0.5$ | $x^{ref}_2$ | $x^{ref}_3 < 0.5$ | $x^{ref}_4$ |
|---|---|---|---|---|
| 1 | False | N/A | False | N/A |
| 2 | False | N/A | False | N/A |
| 3 | False | N/A | True | N/A |
| 4 | False | N/A | True | N/A |
| 5 | True | N/A | True | N/A |
| 6 | True | N/A | True | N/A |
| 7 | False | N/A | True | N/A |
| 8 | False | N/A | False | N/A |
| 9 | False | N/A | True | N/A |
| 10 | True | N/A | False | N/A |

**FIG. 9**

| Sample | $x^{ref}_1 \geq 0.5$ | $x^{ref}_2$ | $x^{ref}_3 \geq 0.5$ | $x^{ref}_4$ |
|--------|--------|--------|--------|--------|
| 1 | False | N/A | True | N/A |
| 2 | False | N/A | True | N/A |
| 3 | False | N/A | False | N/A |
| 4 | False | N/A | False | N/A |
| 5 | True | N/A | False | N/A |
| 6 | True | N/A | False | N/A |
| 7 | False | N/A | False | N/A |
| 8 | False | N/A | True | N/A |
| 9 | False | N/A | False | N/A |
| 10 | True | N/A | True | N/A |

**FIG. 10**

24

1100 ⟶

| | |
|---|---|
| **1101** | Generate reference permutation counts for leaves of trees of a tree-based model |

| | |
|---|---|
| **1102** | Store the reference permutation counts in reference traversal tables |

| | |
|---|---|
| **1103** | Generate a test traversal table for each of the leaves of each of the trees based on test sample data |

| | |
|---|---|
| **1104** | Determine a subset of the traversal permutations that complement one of the test traversal tables for a leaf |

| | |
|---|---|
| **1105** | Determine a subset size for each of the subset of the traversal permutations |

Y ⟵ **1106** More leaves?

N ↓

| | |
|---|---|
| **1107** | Determine whether one of the feature values corresponding to a node satisfies a traversal path |

| | |
|---|---|
| **1108** | Generate a partial attribution value based on the determination |

| | |
|---|---|
| **1109** | Adjust an attribution value for the node based on the partial attribution value and a multiplier |

Y ⟵ **1110** More nodes or traversal paths?

N ↓

| | |
|---|---|
| **1111** | Return the adjusted attribution value for each of the nodes |

**FIG. 11**

EP 4 465 211 A1

| Permutation | $x^{ref}_1 < 0.5$ | $x^{ref}_2 < 0.5$ | Counts (weights) |
|---|---|---|---|
| 1 | False | False | 2 |
| 2 | False | True | 5 |
| 3 | True | False | 1 |
| 4 | True | True | 2 |

**FIG. 12**

| Permutation | $x^{ref}_1 < 0.5$ | $x^{ref}_2 \geq 0.5$ | Counts (weights) |
|---|---|---|---|
| 1 | False | False | 5 |
| 2 | False | True | 2 |
| 3 | True | False | 2 |
| 4 | True | True | 1 |

**FIG. 13**

| Permutation | $x^{ref}_1 \geq 0.5$ | $x^{ref}_3 < 0.5$ | Counts (weights) |
|---|---|---|---|
| 1 | False | False | 3 |
| 2 | False | True | 4 |
| 3 | True | False | 1 |
| 4 | True | True | 2 |

**FIG. 14**

| Permutation | $x^{ref}_1 \geq 0.5$ | $x^{ref}_3 \geq 0.5$ | Counts (weights) |
|---|---|---|---|
| 1 | False | False | 4 |
| 2 | False | True | 3 |
| 3 | True | False | 2 |
| 4 | True | True | 1 |

**FIG. 15**

| $x^{test}_1 < 0.5$ | $x^{test}_2 < 0.5$ |
|---|---|
| False | True |

**FIG. 16**

| $x^{test}_1 < 0.5$ | $x^{test}_3 \geq 0.5$ |
|---|---|
| False | False |

**FIG. 17**

| $x^{test}_1 \geq 0.5$ | $x^{test}_3 < 0.5$ |
|---|---|
| True | False |

**FIG. 18**

| $x^{test}_1 \geq 0.5$ | $x^{test}_3 \geq 0.5$ |
|---|---|
| True | True |

**FIG. 19**

| Permutation | $x^{test}_1 < 0.5$ | $x^{test}_2 < 0.5$ | $\phi_1^{partial}$ | $\phi_2^{partial}$ |
|---|---|---|---|---|
| 1 | False | False | -0.075 | -0.075 |
| 2 | False | True | 0.225 | -0.375 |
| 3 | True | False | -0.1875 | 0.0375 |
| 4 | True | True | 0.4875 | 0.1125 |

**FIG. 20**

| Permutation | $x^{test}_1 < 0.5$ | $x^{test}_2 \geq 0.5$ | $\phi_1^{partial}$ | $\phi_2^{partial}$ |
|---|---|---|---|---|
| 1 | False | False | -0.0125 | -0.0125 |
| 2 | False | True | 0.0125 | -0.0375 |
| 3 | True | False | -0.05 | 0.025 |
| 4 | True | True | 0.1 | 0.125 |

**FIG. 21**

| Permutation | $x^{test}_1 \geq 0.5$ | $x^{test}_3 < 0.5$ | $\phi_1^{partial}$ | $\phi_3^{partial}$ |
|---|---|---|---|---|
| 1 | False | False | 0.0 | 0.0 |
| 2 | False | True | 0.0 | 0.0 |
| 3 | True | False | 0.0 | 0.0 |
| 4 | True | True | 0.0 | 0.0 |

**FIG. 22**

| Permutation | $x^{test}_1 \geq 0.5$ | $x^{test}_3 \geq 0.5$ | $\phi_1^{partial}$ | $\phi_3^{partial}$ |
|---|---|---|---|---|
| 1 | False | False | -0.075 | -0.075 |
| 2 | False | True | 0.025 | -0.175 |
| 3 | True | False | -0.25 | 0.1 |
| 4 | True | True | 0.1 | 0.25 |

**FIG. 23**

| | Europäisches Patentamt European Patent Office Office européen des brevets | **EUROPEAN SEARCH REPORT** | Application Number EP 24 17 6759 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JILEI YANG: "Fast TreeSHAP: Accelerating SHAP Value Computation for Trees", ARXIV.ORG, CORNELL UNIVERSITY LIBRARY, 201 OLIN LIBRARY CORNELL UNIVERSITY ITHACA, NY 14853, 25 March 2022 (2022-03-25), XP091170841, * Sections 3-5 and Appendix A.4-5 and A.9 * ----- | 1-15 | INV. G06N5/045 G06N5/01 |
| X | KHASHAYAR FILOM ET AL: "On marginal feature attributions of tree-based models", ARXIV.ORG, CORNELL UNIVERSITY LIBRARY, 201 OLIN LIBRARY CORNELL UNIVERSITY ITHACA, NY 14853, 16 February 2023 (2023-02-16), XP091439521, * the whole document * ----- | 1-15 | |

| TECHNICAL FIELDS SEARCHED (IPC) |
|---|
| G06N |

The present search report has been drawn up for all claims

| Place of search | Date of completion of the search | Examiner |
|---|---|---|
| The Hague | 11 October 2024 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- US 63502791